# EUROPEAN PATENT SPECIFICATION

(11) **EP 4 293 809 B1**
(45) Date of publication and mention of the grant of the patent: **14.10.2026**
(21) Application number: 22926325.6
(22) Date of filing: 23.09.2022
(51) Int. Cl.: H01M 50/50, H01M 10/04, H01M 10/0587, H01M 50/107, H01M 50/528, H01M 50/533, H01M 50/534, H01M 50/536, H01M 50/538

(54) **CYLINDRICAL ELECTRODE ASSEMBLY, BATTERY CELL, BATTERY, ELECTRICAL DEVICE, AND MANUFACTURING METHOD**
ZYLINDRISCHE ELEKTRODENANORDNUNG, BATTERIEZELLE, BATTERIE, ELEKTRISCHE VORRICHTUNG UND HERSTELLUNGSVERFAHREN
ENSEMBLE ÉLECTRODE CYLINDRIQUE, ÉLÉMENT DE BATTERIE, BATTERIE, DISPOSITIF ÉLECTRIQUE ET PROCÉDÉ DE FABRICATION

(30) Priority: 29.04.2022 CN 202210468138
(43) Date of publication of application: 20.12.2023
(73) Proprietor: Contemporary Amperex Technology (Hong Kong) Limited, Central, Central And Western District (HK)
(72) Inventor: ZHANG, Zige, Ningde City Fujian 352100 (CN); XUE, Qingrui, Ningde City Fujian 352100 (CN); LI, Wei, Ningde City Fujian 352100 (CN); ZHANG, Yu, Ningde City Fujian 352100 (CN); ZHAO, Zhengyuan, Ningde City Fujian 352100 (CN)
(74) Representative: Lorenz Seidler Gossel Part. mbB
(86) International application number: PCT/CN2022/121052
(87) International publication number: WO 2023/206949

(56) References cited:
- CN-A- 101 944 575
- CN-U- 202 977 625
- CN-U- 212 136 495
- CN-U- 212 783 704
- CN-Y- 2 833 899
- CN-Y- 2 833 899
- CN-Y- 2 833 901
- US-A1- 2012 009 450
- US-A1- 2015 171 462
- US-A1- 2020 235 369
- US-A1- 2020 295 338

## Description

### TECHNICAL FIELD

The present application relates to the technical field of batteries, and in particular to a cylindrical electrode assembly, a battery cell, a battery, an electrical device, and a manufacturing method.

### BACKGROUND

Energy conservation and emission reduction are the keys to the sustainable development of the automobile industry. Electric vehicles have become an important part of the sustainable development of the automobile industry due to their advantages of energy conservation and environmental protection. For electric vehicles, battery technology is an important factor in their development. Document US 2020/235369 A1 discloses a cylindrical electrode assembly with a plurality of first tabs protruding out of the end face and being bent towards the end face of the electrode assembly. Further relevant prior art can be found in CN 2 833 899 Y, US 2012/009450, US 2015/171462, CN 212136495 U, CN 212783704 U, and US 2020/295338 A1.

In the development of battery technology, how to improve the safety of batteries is a technical problem to be urgently resolved in the battery technology.

### SUMMARY

The present application provides a cylindrical electrode assembly, a battery cell, a battery, an electrical device, and a manufacturing method. The technical solutions provided by the present application can make the battery cell have higher safety.

The present invention is implemented by the following technical solutions.

According to a first aspect, the present application provides a cylindrical electrode assembly. The cylindrical electrode assembly is of a coiled structure and comprises a main body and a first tab, the main body is provided with a first end face, and the first tab extends out of the first end face and is bent toward the first end face.

According to the technical solutions of embodiments of the present application, the cylindrical electrode assembly is applied to the cylindrical battery cell, the cylindrical electrode assembly is of a coiled structure and comprises a main body and a first tab, and the first tab extends from the first end face of the main body and is bent toward the first end face. The bent first tab is electrically connected to the first electrode lead-out part of the cylindrical battery, so that the input or output of the electric energy of the cylindrical battery cell is achieved. In this way, a height of the first tab is reduced by bending the first tab, so that the first tab occupies a smaller space in the cylindrical battery cell, and the energy density of the cylindrical battery cell is improved. In addition, the first tab is not rubbed and flattened, so that metal particles generated by rubbing and flattening the first tab are effectively avoided, the risk of an internal short circuit caused by the fact that the metal particles fall into the cylindrical electrode assembly is reduced, and the risk of an internal short circuit resulted from tab insertion caused by rubbing and flattening is also reduced, thereby improving the safety of the cylindrical battery cell.

In some embodiments, the first tab comprises a first flat part and a second flat part, the first flat part extends out of the first end face, and the first flat part and the second flat part are bent toward each other.

According to the technical solutions of embodiments of the present application, the first tab comprises a first flat part and a second flat part, and the first tab is bent toward an intersection of the first flat part and the second flat part. This prevents a surface of the first tab from being wrinkled due to uneven rubbing and flattening force due to rubbing and flattening process and generating metal particles, thereby reducing the risk of a short circuit inside the cylindrical battery cell.

In some embodiments, a bent part of the first tab is located at a root part of the first tab.

According to the technical solutions of embodiments of the present application, the first tab is bent from the root part of the first tab, so that metal particles generated by rubbing and flattening the first tab are effectively avoided, the risk of an internal short circuit caused by the fact that the metal particles fall into the cylindrical electrode assembly is reduced, and the risk of an internal short circuit resulted from the first tab insertion caused by rubbing and flattening is also reduced, thereby improving the safety of the cylindrical battery cell.

In some embodiments, the first tab is bent toward the first end face through one turn.

According to the technical solutions of embodiments of the present application, compared with a solution of applying rubbing and flattening force to different positions of the first tab to rub and flatten the first tab, in this solution, the first tab is bent once (that is, force is applied once), so that the first tab can be close to the first end face, metal particles are effectively prevented from being generated, and the safety of the cylindrical battery cell is improved.

In some embodiments, the cylindrical electrode assembly comprises a plurality of the first tabs.

According to the technical solutions of embodiments of the present application, unlike a solution that the current cylindrical battery cells have full tabs, in the present application, the cylindrical electrode assembly comprises a plurality of first tabs, and each first tab exists independently and is bent by the bending process, so that the risk of an internal short circuit caused by using the rubbing and flattening process is reduced, thereby improving the safety of cylindrical battery cells.

In some embodiments, the plurality of first tabs do not overlap with each other before being bent.

According to the technical solutions of embodiments of the present application, since the cylindrical electrode assembly is of a coiled structure, each first tab does not overlap before the first tab is not bent, so that each first tab is stressed uniformly when bent so as to be effectively bent, the difficulty of bending the first tab is reduced, and the manufacturing efficiency of the cylindrical battery cell is improved. Meanwhile, each first tab does not overlap with each other, and metal particles generated by friction of the adjacent first tabs can be avoided, so that the risk of an internal short circuit caused by the metal particles is reduced, and the safety of the cylindrical battery cell is improved.

In some embodiments, the first tab is bent toward a coiled center line of the cylindrical electrode assembly.

According to the technical solutions of embodiments of the present application, since the cylindrical electrode assembly is of a coiled structure, the first tab can be bent toward the coiled center line along its root position, which can reduce the difficulty of bending and prevent the first tab from being damaged due to bending compared with bending in other directions.

According to the present invention, the cylindrical electrode assembly comprises a first electrode plate, the first electrode plate comprises a first current collector and a first active material layer, the first active material layer is coated on a surface of the first current collector, and the first tab is die-cut from an area that is of the first current collector and that is not coated with the first active material layer.

According to the technical solutions of embodiments of the present application, the first tab is formed by die-cutting an area that is of the first current collector and that is uncoated with a first active material layer. Compared with a solution of the full tab, the first tab can be conveniently bent, so that the generation of metal particles is avoided, and the risk of a short circuit inside the cylindrical battery cell is reduced.

According to the present invention, an insulation material is disposed between the first tab and the active material layer-coated area of the first electrode plate to prevent the first tab from being inserted to cause an internal short circuit.

In some embodiments, the first current collector is a composite current collector.

According to the technical solutions of embodiments of the present application, to reduce the risk of a short circuit inside the cylindrical battery cell, a first electrode plate in the cylindrical electrode assembly is made of the composite current collector. However, the bendability of the composite current collector is poor, so the cylindrical electrode assembly with the composite current collector cannot be rubbed and flattened by the rubbing and kneading process. Therefore, the present application does not use the rubbing and flattening process but the bending process, which can solve the problem that the rubbing and flattening process cannot be used for the composite current collector.

In some embodiments, the main body is provided with a second end face, the second end face is disposed opposite to the first end face in a direction of the coiled center line of the cylindrical electrode assembly, the cylindrical electrode assembly further comprises a second tab, and the second tab extends from the second end face and is bent toward the second end face.

According to the technical solutions of embodiments of the present application, the second tab extends out of the second end face of the main body and is bent toward the second end face, and the bent second tab is electrically connected to the second electrode lead-out part, so that the input or output of the electric energy of the cylindrical battery cell is achieved. In this way, a height of the second tab is reduced by bending the second tab, so that the second tab occupies a smaller space in the cylindrical battery cell, and the energy density of the cylindrical battery cell is improved. In addition, the second tab is not rubbed and flattened, so that metal particles generated by rubbing and flattening the second tab are effectively avoided, the risk of an internal short circuit caused by the fact that the metal particles fall into the cylindrical electrode assembly is reduced, and the risk of an internal short circuit resulted from the second tab insertion caused by rubbing and flattening is also reduced, thereby improving the safety of the cylindrical battery cell.

In some embodiments, the second tab comprises a third flat part and a fourth flat part, the third flat part extends out of the second end face, and the third flat part and the fourth flat part are bent toward each other.

According to the technical solutions of embodiments of the present application, the second tab comprises a third flat part and a fourth flat part, and the second tab is bent toward an intersection of the third flat part and the fourth flat part. This prevents a surface of the second tab from being wrinkled due to uneven rubbing and flattening force due to rubbing and flattening process and generating metal particles, thereby reducing the risk of a short circuit inside the cylindrical battery cell.

In some embodiments, a bent part of the second tab is located at a root part of the second tab.

According to the technical solutions of embodiments of the present application, the second tab is bent from the root part of the second tab, so that metal particles generated by rubbing and flattening the second tab are effectively avoided, the risk of an internal short circuit caused by the fact that the metal particles fall into the cylindrical electrode assembly is reduced, and the risk of an internal short circuit caused by the second tab insertion is also reduced, thereby improving the safety of the cylindrical battery cell.

In some embodiments, the second tab is bent toward the second end face through one turn.

According to the technical solutions of embodiments of the present application, compared with a solution of applying rubbing and flattening force to different positions of the second tab to rub and flatten the second tab, in this solution, the second tab is bent once (that is, force is applied once), so that the second tab can be close to the second end face, metal particles are effectively prevented from being generated, and the safety of the cylindrical battery cell is improved.

In some embodiments, the cylindrical electrode assembly comprises a plurality of the second tabs.

Unlike a solution that the current cylindrical battery cells have full tabs, in the present application, the cylindrical electrode assembly comprises a plurality of second tabs, and each second tab exists independently and is bent by the bending process, so that the risk of an internal short circuit caused by using the rubbing and flattening process is reduced, thereby improving the safety of cylindrical battery cells.

In some embodiments, the plurality of second tabs do not overlap with each other before being bent.

According to the technical solutions of embodiments of the present application, since the cylindrical electrode assembly is of a coiled structure, each second tab does not overlap before the second tab is not bent, so that each second tab is stressed uniformly when bent so as to be effectively bent, the difficulty of bending the second tab is reduced, and the manufacturing efficiency of the cylindrical battery cell is improved. Meanwhile, the second tab does not overlap, and metal particles generated by friction of the adjacent second tabs can be avoided, so that the risk of an internal short circuit caused by the metal particles is reduced, and the safety of the cylindrical battery cell is improved.

In some embodiments, the second tab is bent toward a coiled center line of the cylindrical electrode assembly.

According to the technical solutions of embodiments of the present application, since the cylindrical electrode assembly is of a coiled structure, the second tab can be bent toward the coiled center line along its root position, which can reduce the difficulty of bending and prevent the second tab from being damaged due to bending compared with bending in other directions.

In some embodiments, the cylindrical electrode assembly comprises a second electrode plate, the second electrode plate comprises a second current collector and a second active material layer, the second active material layer is coated on a surface of the second current collector, and the second tab is die-cut from an area that is of the second current collector and that is not coated with the second active material layer.

According to the technical solutions of embodiments of the present application, the second tab is formed by die-cutting an area that is of the second current collector and that is uncoated with a first active material layer. Compared with a solution of the full tab, the second tab can be conveniently bent, so that the generation of metal particles is avoided, and the risk of a short circuit inside the cylindrical battery cell is reduced.

In some embodiments, the second current collector is a composite current collector.

According to the technical solutions of embodiments of the present application, to reduce the risk of a short circuit inside the cylindrical battery cell, a second electrode plate in the cylindrical electrode assembly is made of the composite current collector. However, the bendability of the composite current collector is poor, so the cylindrical electrode assembly with the composite current collector cannot be rubbed and flattened by the rubbing and kneading process. Therefore, the present application does not use the rubbing and flattening process but the bending process, which can solve the problem that the rubbing and flattening process cannot be used for the composite current collector.

According to a second aspect, the present application provides a cylindrical battery cell comprising: a housing assembly comprising a first electrode lead-out part configured to input or output electric energy; and the cylindrical electrode assembly according to any one of the embodiments of the first aspect, wherein the first tab is electrically connected to the first electrode lead-out part.

According to a third aspect, the present application provides a battery comprising the cylindrical battery cell according to the second aspect.

According to a fourth aspect, the present application provides an electrical device comprising the battery according to the second aspect, wherein the battery is configured to provide electrical energy.

According to a fifth aspect, the present application provides a manufacturing method for a cylindrical battery cell, comprising:
providing a housing assembly, wherein the housing assembly comprises a first electrode lead-out part configured to input or output electric energy;
providing a cylindrical electrode assembly, wherein the cylindrical electrode assembly is of a coiled structure and comprises a main body and a first tab, the main body is provided with a first end face, and the first tab extends from the first end face;
bending the first tab toward the first end face; and
electrically connecting the bent first tab to the first electrode lead-out part.

According to the technical solutions of embodiments of the present application, compared with a solution of rubbing and flattening the first tab to be electrically connected to the first electrode lead-out part, the first tab is bent toward the first end face so as to be electrically connected to the first electrode lead-out part, so that metal particles generated by rubbing and flattening the first tab are effectively avoided, the risk of an internal short circuit caused by the fact that the metal particles fall into the cylindrical electrode assembly is reduced, and the occurrence of an internal short circuit resulted from the first tab insertion caused by rubbing and flattening is also avoided, thereby improving the safety of the cylindrical battery cell.

In some embodiments, the electrically connecting the bent first tab to the first electrode lead-out part comprises:
providing a protection piece between the bent first tab and the first end face, and performing laser welding on the first tab and the first electrode lead-out part.

According to the technical solutions of embodiments of the present application, the protection piece is provided between the first tab and the first end face, which can effectively prevent damage to the main body of the cylindrical electrode assembly caused by laser welding.

The foregoing description is only an overview of the technical solutions of the present application. To better understand the technical means of the present application, the present application can be implemented according to the contents of the specification, and to make the above and other objectives, features, and advantages of the present application clearer and more understandable, the specific embodiments of the present application are described in detail below.

### BRIEF DESCRIPTION OF THE DRAWINGS

In order to more clearly illustrate the technical solutions of embodiments of the present application, the drawings required in the embodiments will be briefly described below. It should be understood that the following drawings only illustrate some embodiments of the present application and therefore should not be considered as limitations of the scope, and for those of ordinary skill in the art, other related drawings can be obtained according to these drawings without creative efforts.
FIG. 1 is a schematic diagram of a structure of a vehicle according to some embodiments of the present application;
FIG. 2 is an exploded perspective view of a battery according to some embodiments of the present application;
FIG. 3 is an exploded perspective view of a cylindrical battery cell according to some embodiments of the present application;
FIG. 4 is a schematic diagram of a cylindrical electrode assembly and a first electrode lead-out part according to some embodiments of the present application;
FIG. 5 is a schematic diagram of a cylindrical electrode assembly with a first tab bent according to some embodiments of the present application;
FIG. 6 is a top view of a cylindrical electrode assembly with a first tab bent according to some embodiments of the present application;
FIG. 7 is a partial schematic diagram of a cylindrical electrode assembly with a first tab unbent according to some embodiments of the present application;
FIG. 8 is a schematic diagram of a first tab according to some embodiments of the present application;
FIG. 9 is a schematic diagram of a cylindrical electrode assembly and a second electrode lead-out part according to some embodiments of the present application;
FIG. 10 is a schematic diagram of a cylindrical electrode assembly with a second tab bent according to some embodiments of the present application;
FIG. 11 is a flowchart of a manufacturing method for a cylindrical battery cell according to some embodiments of the present application;
FIG. 12 is a flowchart of a manufacturing method for a cylindrical battery cell according to some other embodiments of the present application;
FIGs. 13 to 17 are process diagrams of a design process of a cylindrical battery cell according to some embodiments of the present application.

Reference numerals: 10: cylindrical battery cells; 11: housing assembly; 110: first electrode lead-out part; 111: second electrode lead-out part; 112: housing; 113: end cover; 12: cylindrical electrode assembly; 120: main body; 1200: first end face; 1201: second end face; 121: first tab; 1210: first flat part; 1211: second flat part; 122: first electrode plate; 1220: first current collector; 1221: first active material layer; 123: second tab; 124: second electrode plate; 1240: second current collector; 1241: second active material layer; 125: separator; 126: insulation material; 1000: vehicle; 100: battery; 200: controller; 300: motor; 20: box body; 21: first part; and 22-second part.

### DETAILED DESCRIPTION OF THE EMBODIMENTS

To make the objectives, technical solutions, and advantages of embodiments of the present application clearer, the following clearly and completely describes the technical solutions in embodiments of the present application with reference to the accompanying drawings in embodiments of the present application. It is clear that the described embodiments are merely some rather than all of embodiments of the present application. All other embodiments obtained by those of ordinary skill in the art based on embodiments of the present application without creative efforts shall fall within the protection scope of the present application.

Unless otherwise defined, all technical and scientific terms used in the present application have same meanings as those usually understood by those skilled in the art of the present application. The terms used in the specification of the present application are merely for the purpose of describing specific embodiments, and are not intended to limit the present application. The terms "comprising", "having", or any other variant thereof in the descriptions of the specification, claims, and above accompanying drawings of the present application are intended to cover a non-exclusive inclusion. In the specification, claims, and above accompanying drawings of the present application, terms "first", "second", and the like are intended to distinguish between different objects but do not indicate a particular sequential or chronological order.

An "embodiment" mentioned in the present application means that a particular characteristic, structure, or feature described with reference to embodiments may be included in at least one embodiment of the present application. The phrase shown in various locations in the specification may not necessarily refer to a same embodiment, and is not an independent or optional embodiment exclusive from another embodiment. It is explicitly and implicitly understood by those skilled in the art that embodiments described in the present application may be combined with another embodiment.

In descriptions of the present application, it should be noted that unless otherwise expressly specified and limited, terms "mount", "interconnect", "connect", and "attach" should be understood in a broad sense. For example, such terms may indicate a fixed connection, a detachable connection, or an integral connection; and may indicate direct interconnection, indirect interconnection through an intermediate medium, or internal communication between two elements. Those of ordinary skill in the art may understand specific meanings of the foregoing terms in the present application according to specific cases.

The term "and/or" in the application describes only an association relationship between associated objects, and indicates that three relationships may exist. For example, A and/or B may represent three cases: A exists, both A and B exist, and B exists. In addition, the character "/" in the present application generally indicates an "or" relationship between the associated objects.

In the present application, "a plurality" means more than two (including two).

In the present application, the battery mentioned refers to a single physical module including one or more battery cells to provide higher voltage and capacity. For example, the battery mentioned in the present application may comprise a battery module, a battery pack, or the like.

The cylindrical battery cell comprises a cylindrical electrode assembly and an electrolyte, wherein the cylindrical electrode assembly comprises a positive electrode plate, a negative electrode plate, and a separator. The cylindrical electrode assembly is of a coiled structure, and the positive electrode plate, the negative electrode plate and the separator are stacked and coiled to form the cylindrical electrode assembly. The cylindrical battery cell works primarily by moving metal ions between a positive electrode plate and a negative electrode plate. The positive electrode plate comprises a positive electrode current collector and a positive electrode active material layer, wherein the positive electrode active material layer is coated on a surface of the positive electrode current collector, the current collector which is not coated with the positive electrode active material layer protrudes from the current collector which is coated with the positive electrode active material layer, and the current collector which is not coated with the positive electrode active material layer is used as a positive electrode tab. A lithium-ion battery is used as an example, the material of the positive electrode current collector may be aluminum, and the positive electrode active material may be lithium cobaltate, lithium iron phosphate, ternary lithium, lithium manganate, or the like. The negative electrode plate comprises a negative electrode current collector and a negative electrode active material layer, wherein the negative electrode active material layer is coated on a surface of the negative electrode current collector, the current collector which is not coated with the active material layer protrudes from the negative electrode current collector which is coated with the negative electrode active material layer, and the current collector which is not coated with the negative electrode active material layer is used as a negative electrode tab. The material of the negative electrode current collector may be copper, and the negative electrode active material may be carbon, silicon, or the like. In order to improve the safety of the battery, the positive electrode plate and/or the negative electrode plate can use a composite current collector, and the composite current collector is made of a composite material and comprises an insulation layer and a conductive layer, wherein the conductive layer is disposed at a surface of the insulation layer and comprises a first conductive part and a second conductive part, a surface that is of the first conductive part and faces away from the insulation layer is coated with the active material layer, and the second conductive part not coated with the active material layer is used as a tab. The material of the separator may be PP (polypropylene) or PE (polyethylene). The separator has electronic insulation and is used to separate the adjacent positive electrode plate and negative electrode plate and prevent the adjacent positive electrode plate and negative electrode plate from a short circuit. The separator is provided with a large number of through micropores, which can ensure that electrolyte ions can freely pass through and have good permeability to lithium ions, so that the separator basically cannot prevent the lithium ions from passing through.

The cylindrical battery cell further comprises a housing assembly, the cylindrical electrode assembly is disposed in the housing assembly, and the tab of the cylindrical electrode assembly is electrically connected to the electrode lead-out part of the housing assembly to achieve the output or input of electric energy.

In the development of battery technology, various design factors, such as performance parameters including energy density, discharge capacity, charge/discharge rate, and the like need to be considered. In addition, battery safety also needs to be considered.

For the battery cell, factors affecting the safety of the battery mainly comprise the short circuit inside the battery cell. The inventors find that, in the prior art, the tab in the cylindrical electrode assembly in the cylindrical battery cell is a full tab (a length of the tab on the electrode plate is consistent with that of the current collector coated with the active material layer), and the tab is electrically connected to the electrode lead-out part after being rubbed and flattened by a rubbing and flattening process. However, rubbing and flattening the tab can generate metal particles, and the metal particles fall into the cylindrical electrode assembly, consequently, the positive electrode plate and the negative electrode plate are bonded, resulting in an internal short circuit. Meanwhile, rubbing and flattening the tab can cause tab insertion, resulting in an internal short circuit, and therefore, the safety of the cylindrical battery cell can be affected by the adoption of the rubbing and flattening process.

In view of this, in order to solve the problem that the safety of the cylindrical single body is affected by the rubbing and flattening process, a cylindrical electrode assembly is designed. The cylindrical electrode assembly is of a coiled structure and comprises a main body and a first tab, the main body is provided with a first end face, and the first tab extends out of the first end face and is bent toward the first end face.

According to the technical solutions of embodiments of the present application, the cylindrical electrode assembly is applied to the cylindrical battery cell, the cylindrical electrode assembly is of a coiled structure and comprises a main body and a first tab, and the first tab extends from the first end face of the main body and is bent toward the first end face. The bent first tab is electrically connected to the first electrode lead-out part of the cylindrical battery, so that the input or output of the electric energy of the cylindrical battery cell is achieved. In this way, a height of the first tab is reduced by bending the first tab, so that the first tab occupies a smaller space in the cylindrical battery cell, and the energy density of the cylindrical battery cell is improved. In addition, the first tab is not rubbed and flattened, so that metal particles generated by rubbing and flattening the first tab are effectively avoided, the risk of an internal short circuit caused by the fact that the metal particles fall into the cylindrical electrode assembly is reduced, and the risk of an internal short circuit resulted from tab insertion caused by rubbing and flattening is also reduced, thereby improving the safety of the cylindrical battery cell.

The cylindrical battery cell disclosed by embodiments of the present application can be used in electrical device such as a vehicle, a ship, or an aircraft, but not limited thereto. The power supply system of the electrical device can be composed of a cylindrical battery cell and a battery disclosed in the present application.

An embodiment of the present application provides an electrical device using a battery as a power supply, wherein the electrical device can be but is not limited to a mobile phone, a tablet computer, a notebook computer, an electric toy, an electric tool, an electric bicycle, an electric motorcycle, an electric vehicle, a ship, a spacecraft, and the like. The electric toy may include a stationary or mobile electric toy such as a game console, an electric vehicle toy, an electric ship toy, an electric airplane toy, and the like, and the spacecraft comprises an aircraft, a rocket, a space shuttle, a spacecraft, and the like.

For ease of description, the following embodiments are described by taking an electrical device of an embodiment of the present application as an example of a vehicle 1000.

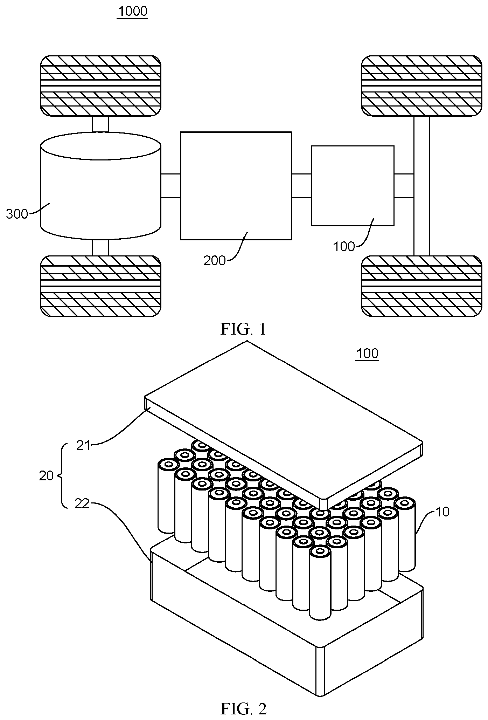

Referring to FIG. 1, FIG. 1 is a schematic diagram of a structure of a vehicle 1000 according to some embodiments of the present application. The vehicle 1000 can be a fuel vehicle, a gas vehicle, or a new energy vehicle, wherein the new energy vehicle can be a pure electric vehicle, a hybrid electric vehicle, a programmable vehicle, or the like. A battery 100 is disposed inside the vehicle 1000, and the battery 100 may be disposed at a bottom, a head, or a tail of the vehicle 1000. The battery 100 may be configured to supply power to the vehicle 1000, for example, the battery 100 may serve as an operation power supply of the vehicle 1000 for the circuit system of the vehicle, such as for power requirements for operation during starting, navigation, and traveling of the vehicle.

The vehicle 1000 may further comprise a controller 200 and a motor 300, wherein the controller 200 is configured to control the battery 100 to supply power to the motor 300, for example, configured for power requirements for operation during starting, navigation, and traveling of the vehicle 1000.

In some embodiments of the present application, the battery 100 may not only be used as an operation power supply for the vehicle 1000, but also be used as a drive power supply for the vehicle 1000, replacing or partially replacing fuel oil or natural gas to provide drive power for the vehicle 1000.

Referring to FIG. 2, FIG. 2 is an exploded perspective view of a battery 100 according to some embodiments of the present application.

The battery 100 comprises a box body 20 and a cylindrical battery cell 10, and the cylindrical battery cell 10 is accommodated in the box body 20. The box body 20 is configured to provide an accommodation space for the cylindrical battery cell 10, and the box body 20 may be of various structures. In some embodiments, the box body 20 may comprise a first part 21 and a second part 22, the first part 21 and the second part 22 are buckled to each other, and the first part 21 and the second part 22 jointly define an accommodation space for accommodating the cylindrical battery cell 10. The second part 22 may be of a hollow structure with an opening formed at one end, the first part 21 may be of a plate structure, and the first part 21 is buckled to an open side of the second part 22, so that the first part 21 and the second part 22 jointly define an accommodation space; the first part 21 and the second part 22 may be both of hollow structures with an opening formed at one side, and an open side of the first part 21 may be buckled to an open side of the second part 22. Certainly, the box body 20 formed by the first part 21 and the second part 22 may be in various shapes, such as a cylinder and a cuboid.

A plurality of cylindrical battery cells 10 are provided in the battery, and the plurality of cylindrical battery cells 10 may be connected in series, in parallel, or in series-parallel, where the series-parallel connection refers to that the plurality of cylindrical battery cells 10 are connected both in series and in parallel. The plurality of cylindrical battery cells 10 may be directly connected in series, in parallel, or in series-parallel, and an entirety formed by the plurality of cylindrical battery cells 10 is accommodated in the box body; certainly, the battery may also be a battery module formed by connecting a plurality of cylindrical battery cells 10 in series, in parallel, or in series-parallel, and then a plurality of battery modules may be connected in series, in parallel, or in series-parallel to form an entirety which is accommodated in the box body. The battery may further comprise other structures, for example, the battery may further comprise a combiner component for achieving electrical connection between the plurality of cylindrical battery cells 10.

Each cylindrical battery cell 10 may be a secondary battery or a primary battery; and it may also be a lithium-sulfur battery, a sodium-ion battery, or a magnesium-ion battery, but is not limited thereto.

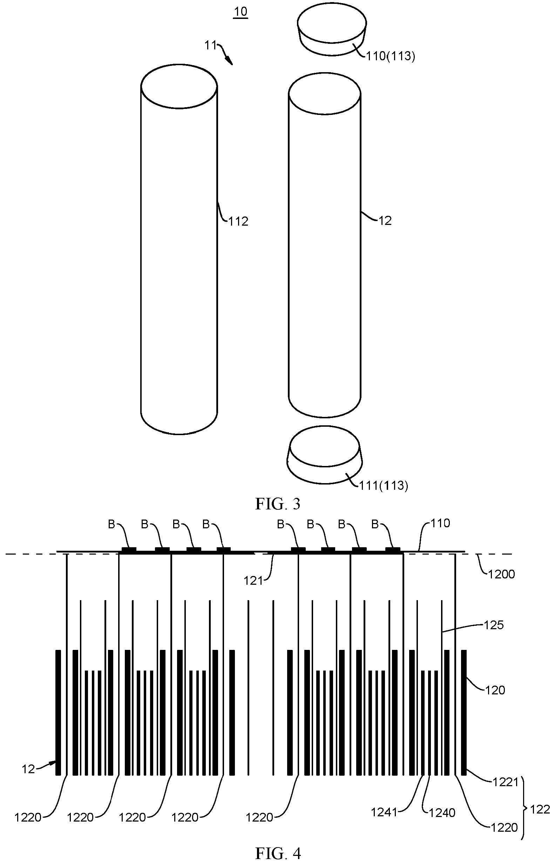

In some embodiments of the present disclosure, referring to FIG. 3, FIG. 3 is an exploded perspective view of a cylindrical battery cell 10 according to some embodiments of the present application.

The cylindrical battery cell 10 comprises a housing assembly 11 and a cylindrical electrode assembly 12. The housing assembly 11 comprises a first electrode lead-out part 110 and a second electrode lead-out part 111 configured to input or output electric energy. A cylindrical electrode assembly 12 is disposed in the housing assembly 11, the cylindrical electrode assembly 12 is provided with a first tab 121 (not shown in FIG. 3) and a second tab 123 (not shown in FIG. 3), the first tab 121 is electrically connected to the first electrode lead-out part 110, and the second tab 123 is electrically connected to the second electrode lead-out part 111 to achieve the output or input of electric energy.

The housing assembly 11 comprises a housing 112 and an end cover 113, the cylindrical electrode assembly 12 is disposed in the housing 112, the housing 112 is provided with an opening, and the end cover 113 is buckled to an opening of the housing 112 to separate an internal environment of the cylindrical battery cell 10 from an external environment. The first electrode lead-out part 110 is a component that is electrically connected to the first tab 121 to achieve the input or output of electric energy to or from the cylindrical battery cell 10. In some embodiments, the first electrode lead-out part 110 may comprise an adapter piece (such as a current collecting disk) and an end cover 113, wherein the first tab 121 is electrically connected to the adapter piece, and the adapter piece is electrically connected to the end cover 113. When the first tab 121 is electrically connected to the end cover 113 through the adapter piece, the end cover 113 is made of a conductive material, such as copper, aluminum, or copper-aluminum alloy. In some other embodiments, the first electrode lead-out part 110 may also comprise an adapter piece and a first electrode terminal, the first electrode terminal is disposed on the end cover 113, and the first tab 121 is electrically connected to the first electrode terminal through the adapter piece. When the first tab 121 is electrically connected to the first electrode terminal through the adapter piece, the first electrode terminal is made of a conductive material, such as copper, aluminum, or copper-aluminum alloy; and the end cover 113 may be made of a variety of materials, such as copper, iron, aluminum, stainless steel, aluminum alloy, and plastic. This is not limited in the embodiment of the present application. In some embodiments, an insulation kit may be further disposed on an inner side of the end cover 113, and the insulation kit may be configured to separate the electrical connection component (such as the first tab 121, the adapter piece, or the first electrode terminal) in the housing 112 from the end cover 113, so as to reduce the risk of a short circuit. For example, the insulation kit may be plastic, rubber, or the like.

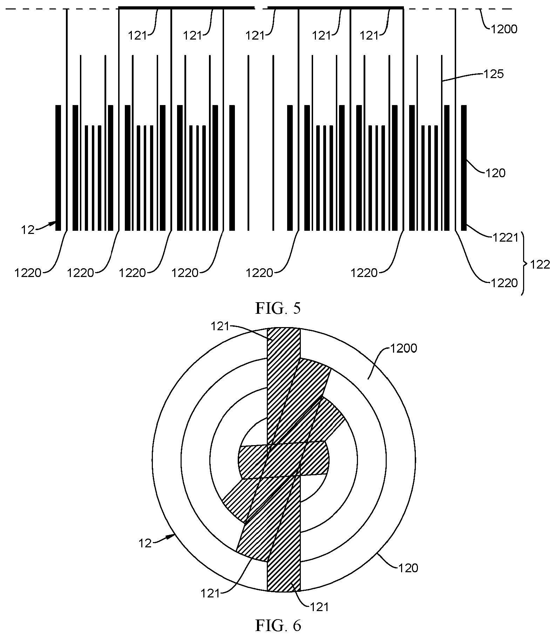

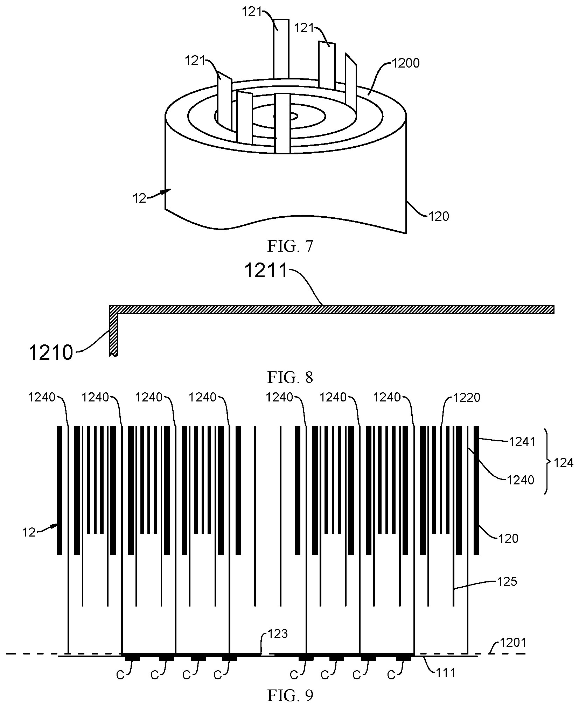

In some embodiments of the present application, referring to FIGs. 3 to 7, FIG. 4 is a schematic diagram of a cylindrical electrode assembly 12 and a first electrode lead-out part 110 according to some embodiments of the present application; FIG. 5 is a schematic diagram of a cylindrical electrode assembly 12 with a first tab 121 bent according to some embodiments of the present application; FIG. 6 is a top view of a cylindrical electrode assembly 12 with a first tab 121 bent according to some embodiments of the present application; and FIG. 7 is a partial schematic diagram of a cylindrical electrode assembly 12 with a first tab 121 unbent according to some embodiments of the present application.

The cylindrical electrode assembly 12 is of a coiled structure and comprises a main body 120 and a first tab 121, the main body 120 is provided with a first end face 1200, and the first tab 121 extends out of the first end face 1200 and is bent toward the first end face 1200.

In FIGs. 4 and 5, the first end face 1200 is shown in dashed lines.

The cylindrical electrode assembly 12 is a component where electrochemical reactions occur in the cylindrical battery cell 10, and in the cylindrical battery cell 10, the cylindrical electrode assembly 12 is disposed within the housing 112. One or more cylindrical electrode assemblies 12 may be included within the housing 112. The cylindrical electrode assembly 12 is mainly formed by coiling a positive electrode tab and a negative electrode tab (a first tab 122 and a second tab 124 described below), and a separator 125 is generally provided between the positive electrode plate and the negative electrode plate, and the separator 125 is configured to separate the positive electrode plate and the negative electrode plate to prevent an internal short circuit of the positive electrode plate and the negative electrode plate. A part that is of the positive electrode plate and that is coated with the active material layer, a part that is of the negative electrode plate and that is coated with the active material layer, and the separator 125 are stacked and coiled to form the main body 120 of the cylindrical electrode assembly 12, and the cylindrical electrode assembly 12 is a component where electrochemical reaction occurs in the main body 120. Referring to FIG. 7, the first tab 121 of the cylindrical electrode assembly 12 is a component extending out of the main body 120, and may be a positive electrode tab or a negative electrode tab, and the first tab 121 is electrically connected to the first electrode lead-out part 110 to output or input electric energy through the first electrode lead-out part 110. FIG. 4 shows a welding position B between the first tab 121 and the first electrode lead-out part 110.

The first end face 1200 is a surface that is of the body 120 and that faces the first electrode lead-out part 110. The first tab 121 is bent toward the first end face 1200 to be close to the first end face 1200, and is electrically connected to the first electrode lead-out part 110, so that the cylindrical battery cell 10 has a compact structure and thus has a high energy density. "Close to" means that the first tab 121 is bent toward the first end face 1200 and is proximal to the first end face 1200, and a gap may exist between a surface that is of the first tab 121 and that faces the first end face 1200 and the first end face 1200, where the gap is a design margin to prevent the first tab 121 from being inserted into the cylindrical battery cell 10 to cause an internal short circuit. In the prior art, with the rubbing and flattening process, there is also a design margin between the tab and the first end face 1200, and the design margin is large due to instability of the rubbing and flattening force. Therefore, the design margin can be reduced by bending instead of the rubbing and flattening process, so as to increase the space utilization rate inside the cylindrical battery cell 10, thereby increasing the energy density.

The first tab 121 extends out of the first end face 1200 and is bent toward the first end face 1200. It means that the first tab 121 protrudes from the first end face 1200, which is different from a solution of a full tab (in the solution of a full tab, after the cylindrical electrode assembly 12 is coiled and formed, the first end face 1200 of the cylindrical electrode assembly is formed by a tab, that is, the tab does not protrude from the first end face 1200). In addition, it means that the first tab 121 is close to the first end face 1200 by the bending process instead of being close to the first end face 1200 by the rubbing and flattening process.

According to the technical solutions of embodiments of the present application, the cylindrical electrode assembly 12 is of a coiled structure and comprises a main body 120 and a first tab 121, and the first tab 121 extends from the first end face 1200 of the main body 120 and is bent toward the first end face 1200. In this way, a height of the first tab 121 is reduced by bending the first tab 121, so that the first tab 121 occupies a smaller space in the housing assembly 11, and the energy density of the cylindrical battery cell 10 is improved. In addition, the first tab 121 is not rubbed and flattened, so that metal particles generated by rubbing and flattening the first tab 121 are effectively avoided, the risk of an internal short circuit caused by the fact that the metal particles fall into the cylindrical electrode assembly 12 is reduced, and the occurrence of an internal short circuit resulted from the tab interpolation caused by rubbing and flattening is also avoided, thereby improving the safety of the cylindrical battery cell 10.

According to some embodiments of the present application, referring to FIG. 8, FIG. 8 is a schematic diagram of a first tab 121 according to some embodiments of the present application.

The first tab 121 comprises a first flat part 1210 and a second flat part 1211, the first flat part 1210 extends out of the first end face 1200 (not shown in FIG. 8), and the first flat part 1210 and the second flat part 1211 are bent toward each other.

The first flat part 1210 is a part that is of the first tab 121 and that extends from the first end face 1200, and the second flat part 1211 is a part that is of the first tab 121 and that is bent toward the first end face 1200 and close to the first flat part 1210. Compared with the solution of rubbing and flattening the tab, the first tab 121 is bent, so that the surfaces of the first flat part 1210 and the second flat part 1211 of the first tab 121 are flattened, the wrinkle of the tab surface due to rubbing and flattening is avoided, and the probability of generating metal particles is reduced.

According to the technical solutions of embodiments of the present application, the first tab 121 comprises a first flat part 1210 and a second flat part 1211, and the first tab 121 is bent toward an intersection of the first flat part 1210 and the second flat part 1211. This prevents a surface of the first tab 121 from being wrinkled due to uneven rubbing and flattening force due to rubbing and flattening process and generating metal particles, thereby reducing the risk of a short circuit inside the cylindrical battery cell 10.

According to some embodiments of the present application, as shown in FIGs. 4 and 5, a bent part of the first tab 121 is located at a root part of the first tab 121.

The root part of the first tab 121 refers to a position where the first tab 121 intersects with the main body 120, and the bent part refers to a position where the first tab 121 is bent. "A bent part of the first tab 121 is located at a root part of the first tab 121", which may be understood that the first tab 121 is bent toward the first end face 1200 of the main body 120 along a position where the first tab intersects with the main body 120 by an external force.

According to the technical solutions of embodiments of the present application, the first tab 121 is bent from the root part of the first tab toward the first end face 1200 by an external force, so that metal particles generated by rubbing and flattening are effectively avoided, the risk of an internal short circuit caused by the fact that the metal particles fall into the cylindrical electrode assembly 12 is reduced, and the occurrence of an internal short circuit caused by the insertion of the first tab 121 is also effectively avoided, thereby improving the safety of the cylindrical battery cell 10.

According to some embodiments of the present application, the first tab 121 is bent toward the first end face 1200 through one turn.

One turn means that the first tab 121 is only subjected to a bending force once, and the direction of the bending force is fixed.

According to the technical solutions of embodiments of the present application, compared with a solution of applying rubbing and flattening force to different positions of the first tab 121 to rub and flatten the first tab 121, in this solution, the first tab 121 is bent once (that is, force is applied once), so that the first tab 121 can be close to the first end face, metal particles are effectively prevented from being generated, and the safety of the cylindrical battery cell 10 is improved.

According to some embodiments of the present application, referring to FIGs. 4 to 7, the cylindrical electrode assembly 12 comprises a plurality of the first tabs 121.

"The electrode assembly 12 comprises a plurality of first tabs 121", which means that the cylindrical electrode assembly 12 comprises a plurality of independent first tabs 121. Each first tab 121 is bent toward the first end face 1200 and electrically connected to the first electrode lead-out part 110. Meanwhile, the "cylindrical electrode assembly 12 comprising the plurality of first tabs 121" is also different from the full tab of the cylindrical battery in the prior art.

Unlike a solution that the current cylindrical battery cells 10 have full tabs, in the present application, the cylindrical electrode assembly 12 comprises a plurality of first tabs 121, and each first tab 121 exists independently, and each first tab 121 is bent by the bending process, so that the risk of an internal short circuit caused by using the rubbing and flattening process is reduced, thereby improving the safety of cylindrical battery cells 10.

Optionally, the number of the first tabs 121 can influence the overcurrent capability of the cylindrical battery cell 10, and the greater the number of the first tabs 121, the better the overcurrent capability. It should be noted that the first tab 121 may be welded to the first electrode lead-out part 110, and the overcurrent capability of the cylindrical battery cell 10 may be improved by increasing the welding point between the first tab 121 and the first electrode lead-out part 110.

Optionally, in some embodiments, the cylindrical electrode assembly 12 may also comprise one first tab 121, and the one first tab 121 is electrically connected to the first electrode lead-out part 110.

According to some embodiments of the present application, the plurality of first tabs 121 do not overlap with each other before being bent.

Before the first tab 121 of the cylindrical electrode assembly 12 is bent, the plurality of first tabs 121 of the cylindrical electrode assembly 12 are not overlapped with each other and are disposed in a staggered manner.

Since the cylindrical electrode assembly 12 is of a coiled structure, each first tab 121 does not overlap before the first tab 121 is not bent, so that each first tab 121 is stressed uniformly when bent so as to be effectively bent, the difficulty of bending the first tab 121 is reduced, and the manufacturing efficiency of the cylindrical battery cell 10 is improved. Meanwhile, each first tab 121 does not overlap with each other, and metal particles generated by friction of the adjacent first tabs 121 can be avoided, so that the risk of an internal short circuit caused by the metal particles is reduced, and the safety of the cylindrical battery cell 10 is improved.

According to some embodiments of the present application, referring to FIGs. 6 and 7, the first tab 121 is bent toward a coiled center line of the cylindrical electrode assembly 12.

The positive electrode plate, the negative electrode plate, and the separator 125 are coiled around a coiled center line to form the cylindrical electrode assembly 12. The coiled center line passes through a center of the first end face 1200.

According to the technical solutions of embodiments of the present application, since the cylindrical electrode assembly 12 is of a coiled structure, the first tab 121 can be bent toward the coiled center line along its root position, which can reduce the difficulty of bending and prevent the first tab 121 from being damaged due to bending compared with bending in other directions.

Optionally, in other embodiments, the bending direction of the first tab 121 is not limited. The first tab can be bent in any direction, as long as it is close to the first end face 1200.

According to some embodiments of the present application, the cylindrical electrode assembly 12 comprises a first electrode plate 122, the first electrode plate 122 comprises a first current collector 1220 and a first active material layer 1221, the first active material layer 1221 is coated on a surface of the first current collector 1220, and the first tab 121 is die-cut from an area that is of the first current collector 1220 and that is not coated with the first active material layer 1221.

The first electrode plate 122 may be a positive electrode plate or a negative electrode plate of the cylindrical electrode assembly 12.

The die-cutting refers to cutting an area that is of the first current collector 1220 and that is not coated with the first active material layer 1221 to form an independent first tab 121, so that the first tab 121 can be bent.

According to the technical solutions of embodiments of the present application, the first tab 121 is formed by die-cutting an area that is of the first current collector 1220 and that is uncoated with a first active material layer 1221. Compared with a solution of the full tab, the first tab 121 can be conveniently bent, so that the generation of metal particles is avoided, and the risk of a short circuit inside the cylindrical battery cell 10 is reduced.

According to some embodiments of the present application, the first current collector 1220 is a composite current collector.

The composite current collector is made of a composite material and comprises an insulation layer and a conductive layer, wherein the conductive layer is disposed at a surface of the insulation layer and comprises a first conductive part and a second conductive part, a surface that is of the first conductive part and faces away from the insulation layer is coated with the active material layer, and the second conductive part not coated with the active material layer is used as a tab. When the first current collector 1220 is a composite current collector, the risk of an internal short circuit caused by the first electrode plate 122 being pierced by foreign matters (such as metal particles) can be effectively reduced through the insulation layer, however, the insulation layer may affect the bendability of the first electrode plate 122, so that the first electrode plate 122 cannot be rubbed and flattened.

According to the technical solutions of embodiments of the present application, to reduce the risk of a short circuit inside the cylindrical battery cell 10, a first electrode plate 122 in the cylindrical electrode assembly 12 is made of the composite current collector. However, the bendability of the first electrode plate 122 is affected by the composite current collector (the first current collector 1220), so that the first current collector 1220 cannot be rubbed and flattened by the rubbing and flattening process, and therefore, the problem that the first current collector 1220 cannot be rubbed and flattened by the rubbing and flattening process by directly bending the first tab 121 without the rubbing and flattening process in the present application can be solved.

According to the present invention, to improve the safety of the cylindrical battery, an insulation material is disposed between the first tab 121 and the active material layer-coated area of the first electrode plate 122 to prevent the first tab 121 from being inserted to cause an internal short circuit.

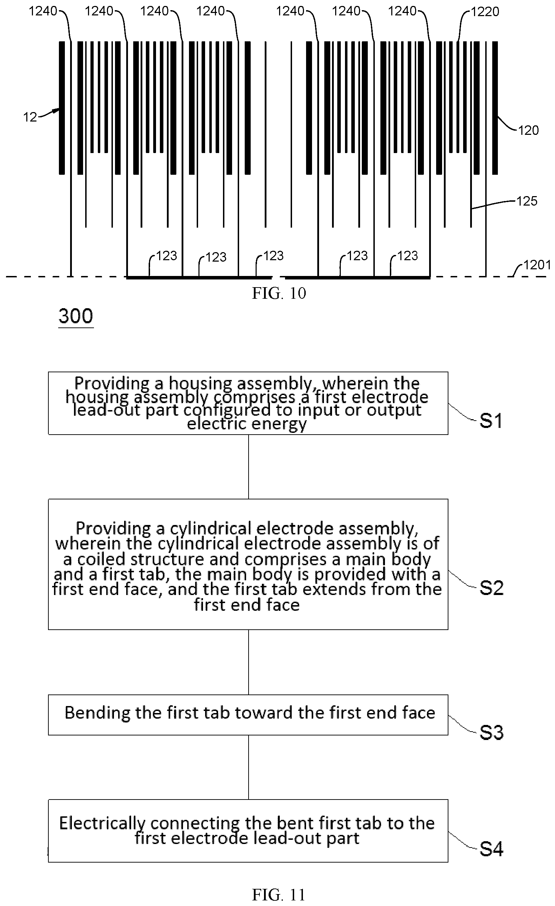

According to some embodiments of the present disclosure, referring to FIGs. 3, 9 and 10, FIG. 9 is a schematic diagram of a cylindrical electrode assembly 12 and a second electrode lead-out part 111 according to some embodiments of the present application, and FIG. 10 is a schematic diagram of a cylindrical electrode assembly 12 with a second tab 123 bent according to some embodiments of the present application. The main body 120 is provided with a second end face 1201, the second end face 1201 is disposed opposite to the first end face 1200 in a direction of the coiled center line of the cylindrical electrode assembly 12, the cylindrical electrode assembly 12 further comprises a second tab 123, and the second tab 123 extends from the second end face 1201 and is bent toward the second end face 1201.

In FIGs. 9 and 10, the second end face 1201 is shown in dashed lines. FIG. 9 shows a welding position C between the second tab 123 and the second electrode lead-out part 111.

The second end face 1201 is a position opposite to the first end face 1200 in the direction of the coiled center line. The second tab 123 is a component disposed opposite to the first tab 121 in the coiled center line direction, and the polarity of the second tab 123 is opposite to that of the first tab 121, that is, when the first tab 121 is a positive electrode tab, the second tab 123 is a negative electrode tab.

The second tab 123 is bent toward the second end face 1201, and is configured to electrically connect to the second electrode lead-out part 111 for inputting or outputting electrical energy. Referring to FIG. 3, in some embodiments, the housing assembly 11 comprises two end covers 113, and the housing 112 has openings at two ends, and each opening is buckled by a corresponding end cover 113. The second electrode lead-out part 111 may comprise an adapter piece (such as a current collecting disk) and an end cover 113, wherein the second tab 123 is electrically connected to the adapter piece, and the adapter piece is electrically connected to the end cover 113. When the second tab 123 is electrically connected to the end cover 113 through the adapter piece, the end cover 113 is made of a conductive material, such as copper, aluminum, or copper-aluminum alloy. In some other embodiments, the second electrode lead-out part 111 may also comprise an adapter piece and a second electrode terminal, the second electrode terminal is disposed on the end cover 113, and the second tab 123 is electrically connected to the second electrode terminal through the adapter piece. When the second tab 123 is electrically connected to the second electrode terminal through the adapter piece, the second electrode terminal is made of a conductive material, such as copper, aluminum, or copper-aluminum alloy; and the end cover 113 may be made of a variety of materials, such as copper, iron, aluminum, stainless steel, aluminum alloy, and plastic. This is not limited in the embodiment of the present application. In some embodiments, an insulation kit may be further disposed on an inner side of the end cover 113, and the insulation kit may be configured to separate the electrical connection component (such as the second tab 123, the adapter piece, or the second electrode terminal) in the housing 112 from the end cover 113, so as to reduce the risk of a short circuit. For example, the insulation kit may be plastic, rubber, or the like.

The second end face 1201 is a surface that is of the body 120 and that faces the second electrode lead-out part 111. The second tab 123 is bent toward the second electrode lead-out part 111 to be close to the second end face 1201, and is electrically connected to the second electrode lead-out part 111, so that the cylindrical battery cell 10 has a compact structure and thus has a high energy density. "Close to" means that the second tab 123 is bent toward the second end face 1201 and is proximal to the second end face 1201, and a gap may exist between a surface that is of the second tab 123 and that faces the second end face 1201 and the second end face 1201, where the gap is a design margin to avoid the short circuit inside the cylindrical battery cell 10. In the prior art, with the rubbing and flattening process, there is also a design margin between the tab and the second end face 1201, and the design margin is large due to instability of the rubbing and flattening force. Therefore, the design margin can be reduced by bending instead of the rubbing and flattening process, so as to increase the space utilization rate inside the cylindrical battery cell 10, thereby increasing the energy density.

The second tab 123 extends out of the second end face 1201 and is bent toward the second end face 1201. It means that the second tab 123 protrudes from the second end face 1201, which is different from a solution of a full tab (in the solution of a full tab, after the cylindrical electrode assembly 12 is coiled and formed, the second end face 1201 of the cylindrical electrode assembly is formed by a tab, that is, the tab does not protrude from the second end face 1201). In addition, it means that the second tab 123 is close to the second end face 1201 by the bending process instead of being close to the second end face 1201 by the rubbing and flattening process.

According to the technical solutions of embodiments of the present application, the second tab 123 extends out of the second end face 1201 of the main body 120 and is bent toward the second end face 1201, and the bent second tab 123 is electrically connected to the second electrode lead-out part 111, so that the input or output of the electric energy of the cylindrical battery cell 10 is achieved. In this way, a height of the second tab 123 is reduced by bending the second tab 123, so that the second tab 123 occupies a smaller space in the housing assembly, and the energy density of the cylindrical battery cell 10 is improved. In addition, the second tab 123 is not rubbed and flattened, so that metal particles generated by rubbing and flattening are effectively avoided, the risk of an internal short circuit caused by the fact that the metal particles fall into the cylindrical electrode assembly 12 is reduced, and the occurrence of an internal short circuit resulted from the tab interpolation caused by rubbing and flattening is also avoided, thereby improving the safety of the cylindrical battery cell 10.

According to some embodiments of the present application, the second tab 123 comprises a third flat part and a fourth flat part, the third flat part extends out of the second end face 1201, and the third flat part and the fourth flat part are bent toward each other. The third flat part and the fourth flat part may be referred to as the first flat part 1210 and the second flat part 1211 in FIG. 8.

The third flat part is a part that is of the second tab 123 and that extends from the second end face 1201, and the fourth flat part is a part that is of the second tab 123 and that is bent toward the third flat part and close to the second end face 1201. Compared with the solution of rubbing and flattening the tab, the second tab 123 is bent, so that the surfaces of the third flat part and the fourth flat part of the second tab 123 are flattened, the wrinkle of the tab surface due to rubbing and flattening is avoided, and the probability of generating metal particles is reduced.

According to the technical solutions of embodiments of the present application, the second tab 123 comprises a third flat part and a fourth flat part, and the second tab 123 is bent toward an intersection of the third flat part and the fourth flat part. This prevents a surface of the second tab 123 from being wrinkled due to uneven rubbing and flattening force due to rubbing and flattening process and generating metal particles, thereby reducing the risk of a short circuit inside the cylindrical battery cell 10.

According to some embodiments of the present application, as shown in FIGs. 9 and 10, a bent part of the second tab 123 is located at a root part of the second tab 123.

The root part of the second tab 123 refers to a position where the second tab 123 intersects with the main body 120, and the bent part refers to a position where the second tab 123 is bent. "A bent part of the second tab 123 is located at a root part of the second tab 123", which may be understood that the second tab 123 is bent toward the second end face 1201 of the main body 120 along a position where the first tab intersects with the main body 120 by an external force.

According to the technical solutions of embodiments of the present application, the second tab 123 is bent from the root part of the second tab toward the second end face 1201 by an external force, so that metal particles generated by rubbing and flattening are effectively avoided, the risk of an internal short circuit caused by the fact that the metal particles fall into the cylindrical electrode assembly 12 is reduced, and the occurrence of an internal short circuit caused by the insertion of the second tab 123 is also effectively avoided, thereby improving the safety of the cylindrical battery cell 10.

According to some embodiments of the present application, the second tab 123 is bent toward the second end face 1201 through one turn.

One turn means that the second tab 123 is only subjected to a bending force once, and the direction of the bending force is fixed.

According to the technical solutions of embodiments of the present application, compared with a solution of applying rubbing and flattening force to different positions of the second tab 123 to rub and flatten the second tab 123, in this solution, the second tab 123 is bent once (that is, force is applied once), so that the second tab 123 can be close to the second end face 1201, metal particles are effectively prevented from being generated, and the safety of the cylindrical battery cell 10 is improved.

According to some embodiments of the present application, the cylindrical electrode assembly 12 comprises a plurality of second tabs 123.

"The electrode assembly 12 comprises a plurality of second tabs 123", which means that the cylindrical electrode assembly 12 comprises a plurality of independent second tabs 123. Each second tab 123 is bent toward the second end face 1201 and electrically connected to the second electrode lead-out part 111. Meanwhile, the "cylindrical electrode assembly 12 comprising the plurality of second tabs 123" is also different from the full tab of the cylindrical battery cell 10 in the prior art.

Unlike a solution that the current cylindrical battery cells 10 have full tabs, in the present application, the cylindrical electrode assembly 12 comprises a plurality of second tabs 123, each second tab 123 exists independently, and each second tab 123 is bent by the bending process, so that the risk of an internal short circuit caused by using the rubbing and flattening process is reduced, thereby improving the safety of cylindrical battery cells 10.

Optionally, the number of the second tabs 123 can influence the overcurrent capability of the cylindrical battery cell 10, and the greater the number of the second tabs 123, the better the overcurrent capability. It should be noted that the second tab 123 may be welded to the second electrode lead-out part 111, and the overcurrent capability of the cylindrical battery cell 10 may be improved by increasing the welding point between the second tab 123 and the second electrode lead-out part 111.

Optionally, in some embodiments, the cylindrical electrode assembly 12 may also comprise one second tab 123, and the one second tab 123 is electrically connected to the second electrode lead-out part 111.

According to some embodiments of the present application, the plurality of second tabs 123 do not overlap with each other before being bent.

Before the second tab 123 of the cylindrical electrode assembly 12 is bent, the plurality of second tabs 123 of the cylindrical electrode assembly 12 are not overlapped with each other and are disposed in a staggered manner. The positional relationship between the second tabs 123 can be understood by referring to the plurality of first tabs 121 disposed in a staggered manner in FIG. 7.

Since the cylindrical electrode assembly 12 is of a coiled structure, each second tab 123 does not overlap before the second tab 123 is not bent, so that each second tab 123 is stressed uniformly when bent so as to be effectively bent, the difficulty of bending the second tab 123 is reduced, and the manufacturing efficiency of the cylindrical battery cell 10 is improved. Meanwhile, each second tab 123 does not overlap with each other, and metal particles generated by friction of the adjacent second tabs 123 can be avoided, so that the risk of an internal short circuit caused by the metal particles is reduced, and the safety of the cylindrical battery cell 10 is improved.

According to some embodiments of the present application, the second tab 123 is bent toward a coiled center line of the cylindrical electrode assembly 12.

The positive electrode plate, the negative electrode plate, and the separator 125 are coiled around a coiled center line to form the cylindrical electrode assembly 12. The coiled center line passes through a center of the second end face 1201.

According to the technical solutions of embodiments of the present application, since the cylindrical electrode assembly 12 is of a coiled structure, the second tab 123 can be bent toward the coiled center line along its root position, which can reduce the difficulty of bending and prevent the second tab 123 from being damaged due to bending compared with bending in other directions. Optionally, in other embodiments, the bending direction of the first tab 121 is not limited. The first tab can be bent in any direction, as long as it is close to the first end face 1200.

According to some embodiments of the present application, the cylindrical electrode assembly 12 comprises a second electrode plate 124, the second electrode plate 124 comprises a second current collector 1240 and a second active material layer 1241, the second active material layer 1241 is coated on a surface of the second current collector 1240, and the second tab 123 is die-cut from an area that is of the second current collector 1240 and that is not coated with the second active material layer 1241.

The second electrode plate 124 may be a positive electrode plate or a negative electrode plate of the cylindrical electrode assembly 12, and the polarity of the second electrode plate 124 is opposite to that of the first electrode plate 122, for example, when the first electrode plate 122 is a positive electrode plate, the second electrode plate 124 is a negative electrode plate.

The die-cutting refers to cutting an area that is of the second current collector 1240 and that is not coated with the second active material layer 1241 to form an independent second tab 123, so that the second tab 123 can be bent.

According to the technical solutions of embodiments of the present application, the second tab 123 is formed by die-cutting an area that is of the second current collector 1240 and that is uncoated with a second active material layer 1241. Compared with a solution of the full tab, the second tab 123 can be conveniently bent, so that the generation of metal particles is avoided, and the risk of a short circuit inside the cylindrical battery cell 10 is reduced.

According to some embodiments of the present application, the second current collector 1240 is a composite current collector.

The composite current collector is made of a composite material and comprises an insulation layer and a conductive layer, wherein the conductive layer is disposed at a surface of the insulation layer and comprises a first conductive part and a second conductive part, a surface that is of the first conductive part and faces away from the insulation layer is coated with the active material layer, and the second conductive part not coated with the active material layer is used as a tab. When the second electrode plate 124 comprises the composite current collector, the risk of an internal short circuit caused by the second electrode plate 124 being pierced by foreign matters (such as metal particles) can be effectively reduced through the insulation layer, however, the insulation layer may affect the bendability of the second electrode plate 124, so that the second electrode plate 124 cannot be rubbed and flattened.

According to the technical solutions of embodiments of the present application, to reduce the risk of a short circuit inside the cylindrical battery cell 10, a second electrode plate 124 in the cylindrical electrode assembly 12 is made of the composite current collector. However, the use of the composite current collector (the second current collector 1240) may affect the bendability of the second electrode plate 124, consequently, the cylindrical electrode assembly 12 with the composite current collector cannot rub and flatten the second electrode plate 123 by using the rubbing and flattening process. Therefore, the problem that the second current collector 1240 cannot be rubbed and flattened by the rubbing and flattening process by directly bending the second tab 123 without the rubbing and flattening process in the present application can be solved.

According to the present invention, to improve the safety of the cylindrical battery, an insulation material may be disposed between the second tab 123 and the active material layer-coated area of the second electrode plate 124 to prevent the second tab 123 from being inserted to cause an internal short circuit.

According to some embodiments of the present application, referring to FIGs. 3 to 10, the present application further provides a cylindrical battery cell 10. The cylindrical battery cell 10 comprises a housing assembly 11 and the cylindrical electrode assembly 12 according to any one of the above embodiments, and comprises a first electrode lead-out part 110 configured to input or output electrical energy, and a first tab 121 electrically connected to the first electrode lead-out part 110.

According to some embodiments of the present application, the present application further provides a battery comprising the cylindrical battery cell 10 according to any one of the above embodiments.

According to some embodiments of the present application, the present application further provides an electrical device, comprising the battery according to the above embodiment, where the battery is configured to provide electric energy.

According to some embodiments of the present application, referring to FIG. 11, FIG. 11 is a flowchart of a manufacturing method for a cylindrical battery cell according to some embodiments of the present application. The present application further provides a manufacturing method 300 for a cylindrical battery cell, comprising:
S1: providing a housing assembly 11, wherein the housing assembly 11 comprises a first electrode lead-out part 110 configured to input or output electric energy;
S2: providing a cylindrical electrode assembly 12, wherein the cylindrical electrode assembly 12 is of a coiled structure and comprises a main body 120 and a first tab 121, the main body 120 is provided with a first end face 1200, and the first tab 121 extends from the first end face 1200;
S3: bending the first tab 121 toward the first end face 1200; and
S4: electrically connecting the bent first tab 121 to the first electrode lead-out part 110.

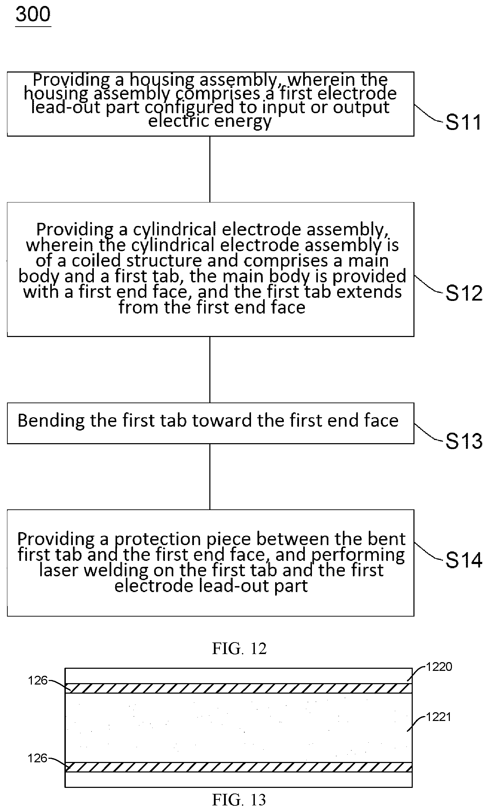

According to some embodiments of the present application, referring to FIG. 12, FIG. 12 is a flowchart of a manufacturing method for a cylindrical battery cell according to some other embodiments of the present application. The manufacturing method 300 for a cylindrical battery cell comprises:
S11: providing a housing assembly 11, wherein the housing assembly 11 comprises a first electrode lead-out part configured to input or output electric energy 110;
S12: providing a cylindrical electrode assembly 12, wherein the cylindrical electrode assembly 12 is of a coiled structure and comprises a main body 120 and a first tab 121, the main body 120 is provided with a first end face 1200, and the first tab 121 extends from the first end face 1200;
S13: bending the first tab 121 toward the first end face 1200; and
S14: providing a protection piece between the bent first tab 121 and the first end face 1200, and performing laser welding on the first tab 121 and the first electrode lead-out part 110.

The protection piece is provided between the first tab 121 and the first end face 1200, which can effectively prevent damage to the main body 120 of the cylindrical electrode assembly 12 caused by laser welding.

According to some embodiments of the present application, referring to FIGs. 3 to 10, the present application further provides a cylindrical battery cell 10. The cylindrical battery comprises a housing assembly 11 and a cylindrical electrode assembly 12. The housing assembly 11 comprises a housing 112, a first electrode lead-out part 110, and a second electrode lead-out part 111. The cylindrical electrode assembly 12 is disposed within the housing assembly 11. The cylindrical electrode assembly 12 is of a coiled structure and comprises a main body 120, a plurality of first tabs 121 and a plurality of second tabs 123, wherein the cylindrical electrode assembly 12 comprises a first electrode plate 122, a second electrode plate 124, and a separator 125, the first electrode plate 122 comprises a first current collector 1220 and a first active material layer 1221, the first active material layer 1221 is coated on a surface of the first current collector 1220, the first tab 121 is formed in an area that is of the first current collector 1220 and that is not coated with the first active material layer 1221, the second electrode plate 124 comprises a second current collector 1240 and a second active material layer 1241, the second active material layer 1241 is coated on a surface of the second current collector 1240, and the second tab 123 is formed in an area that is of the second current collector 1240 and that is not coated with the second active material layer 1241. The first electrode plate 122, the second electrode plate 124, and the separator are stacked and coiled to form the cylindrical electrode assembly 12, wherein a structure formed by coiling an area that is of the first electrode plate 122 and that is not coated with the first active material layer 1221, an area that is of the second electrode plate 124 and that is not coated with the second active material layer 1241, and the separator 125 is the main body 120 of the cylindrical electrode assembly 12. The first current collector 1220 and the second current collector 1240 are composite current collectors.

The main body 120 is provided with a first end face 1200 and a second end face 1201 disposed opposite to each other. The first tab 121 extends from the first end face 1200 and is bent toward the first end face 1200, each first tab 121 is bent toward a coiled center line of the cylindrical electrode assembly 12, and the bent first tab 121 is welded to the first electrode lead-out part 110. Each first tab 121 does not overlap with each other before being bent. The second tab 123 extends from the second end face 1201 and is bent toward the second end face 1201, each second tab 123 is bent toward a coiled center line of the cylindrical electrode assembly 12, and the bent second tab 123 is welded to the second electrode lead-out part 111. Each second tab 123 does not overlap with each other before being bent.

According to some embodiments of the present disclosure, the present invention further provides a design process of a cylindrical battery cell, referring to FIGs. 13 to 17, and FIGs. 13 to 17 are process diagrams of a design process of a cylindrical battery cell according to some embodiments of the present application.

The process flows comprise the following: coating -> cold pressing -> (roll welding -> gluing) -> laser die-cutting -> stripping -> coiling -> tab-bending -> laser welding.

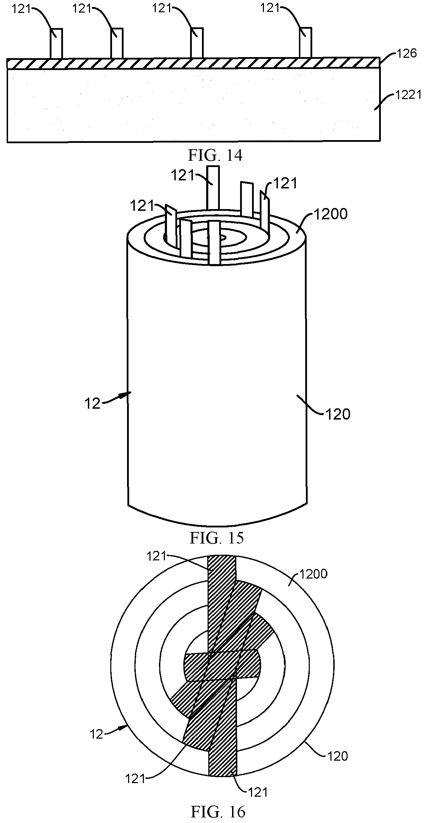

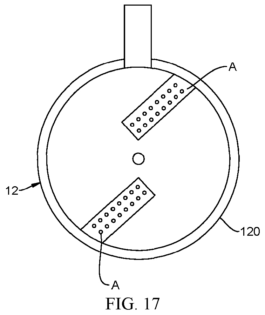

FIG. 13 shows a coating process, FIG. 14 shows a laser die-cutting process, FIG. 15 shows a coiling process, FIG. 16 shows a tab-bending process, and FIG. 17 shows a laser welding process.

The coating process is a process of uniformly coating an active material on a surface of the current collector. The cold pressing process is a process of rolling the current collector coated with the active material by rollers. In this way, the coated active material is more compact, the energy density is improved, and the consistency of the thickness is ensured. Meanwhile, dust and humidity can be further controlled. FIG. 13 shows an example of the first current collector 1220 and the first active material layer 1221 coated on a surface of the first current collector 1220. Meanwhile, FIG. 13 also shows an example of an insulation material 126 at an intersection of an area that is of the first current collector 1220 and that is coated with the first current collector 1220 and an area that is of the first current collector 1220 and that is uncoated with the first current collector.

"(Roll welding -> gluing)" means that, in some embodiments, when the current collector is a composite current collector, the current collector cannot be effectively welded to an adapter piece (such as a current collecting disc) because the material of the current collector is a composite material, and therefore, in order to ensure that the tab is effectively welded to the adapter piece (such as a current collecting disc), a base material (or a base material capable of being welded to the adapter piece) which is the same as the material of the adapter piece is welded to an area that is of the current collector and that is not coated with the active material. After the roll welding process is finished, the current collector and the base material are coated with glue, and the influence on the electrode plate caused by metal particles generated by roll welding is avoided.

The laser die-cutting process refers to die-cutting an electrode plate to cut out a tab. The tab is the first tab 121 or the second tab 123 according to the above embodiments.

The stripping process refers to stripping the electrode plate with the die-cut tab to process the electrode plate into an electrode plate with a required size, so that the subsequent process is facilitated.

The coiling process refers to stacking and coiling a positive electrode plate, a negative electrode plate, and a separator 125 to form a cylindrical electrode assembly 12 of a cylindrical battery cell 10. As shown in FIG. 15, a main body 120 of the cylindrical electrode assembly 12 and a first tab 121 protruding from the main body 120 can be seen.

The tab-bending process refers to bend a tab (such as the first tab 121 or the second tab 123) of the cylindrical electrode assembly 12 of the cylindrical battery cell 10. As shown in FIG. 16, a first end face 1200 of the main body 120 and a first tab 121 bent toward the first end face 1200 can be seen.

The laser welding process refers to welding the bent tab to an adapter piece (such as a first electrode lead-out part 110 or a second electrode lead-out part 111). An assembly fixture (such as the protection piece according to the above embodiments) is required between a tab and an unpackaged cell (the main body 120 of the cylindrical electrode assembly 12) to prevent damage to the cylindrical battery cell 10 after the current collector is pierced during laser welding. As shown in FIG. 17, a first electrode lead-out part 110 as well as a welding position A of the first electrode lead-out part 110 to a first tab 121 can be seen.

Through the design process of the cylindrical battery cell 10 provided above, damage to the composite current collector due to the rubbing and flattening force in the rubbing and flattening process can be prevented; and the utilization rate of the margin (design margin) due to the rubbed and flattened space is reduced, the space utilization rate is increased, and the energy density of the cylindrical battery cell 10 is improved. Since the rubbing and flattening process is not used, the generation of metal particles can be reduced, and the risk of an internal short circuit of the separator 125 of the cylindrical battery cell 10 due to the bonding of the positive electrode plate and the negative electrode plate caused by the piece of metal particles is reduced; and the risk of an internal short circuit resulted from tab insertion caused by the rubbing and flattening process is also reduced.

The above described contents are only preferred embodiments of the present application and are not intended to limit the present application. For those skilled in the art, the present application can be modified and varied. Any modification, equivalent replacement, improvement, or the like made without departing from the principle of the present application shall fall within the protection scope of the present application

## Claims

1. A cylindrical electrode assembly (12), wherein
the cylindrical electrode assembly (12) is of a coiled structure and comprises a main body (120) and a first tab (121), the main body (120) is provided with a first end face (1200), and the first tab (121) extends out of the first end face (1200) and is bent toward the first end face (1200),
**characterized in that**
the cylindrical electrode assembly (12) comprises a first electrode plate (122), the first electrode plate (122) comprises a first current collector (1220) and a first active material layer (1221), the first active material layer (1221) is coated on a surface of the first current collector (1220), and the first tab (121) is die-cut from an area that is of the first current collector (1220) and that is not coated with the first active material layer (1221); and
an insulation material (126) is disposed between the first tab (121) and the active material layer-coated area of the first electrode plate (122).

2. The cylindrical electrode assembly (12) according to claim 1, wherein
the first tab (121) comprises a first flat part (1210) and a second flat part (1211), the first flat part (1210) extends out of the first end face (1200), and the first flat part (1210) and the second flat part (1211) are bent toward each other; and/or
a bent part of the first tab (121) is located at a root part of the first tab (121).

3. The cylindrical electrode assembly (12) according to claim 1 or claim 2, wherein
the first tab (121) is bent toward the first end face (1200) through one turn; optionally
the cylindrical electrode assembly (12) comprises a plurality of first tabs (121); and optionally
the plurality of first tabs (121) do not overlap with each other before being bent.

4. The cylindrical electrode assembly (12) according to any one of claims 1 to 3, wherein
the first tab (121) is bent toward a coiled center line of the cylindrical electrode assembly (12).

5. The cylindrical electrode assembly (12) according to any one of claims 1 to 4, wherein
the first current collector (1220) is a composite current collector.

6. The cylindrical electrode assembly (12) according to any one of claims 1 to 5, wherein
the main body (120) is provided with a second end face (1201), the second end face (1201) is disposed opposite to the first end face (1200) in a direction of the coiled center line of the cylindrical electrode assembly (12), the cylindrical electrode assembly (12) further comprises a second tab (123), and the second tab (123) extends from the second end face (1201) and is bent toward the second end face (1201); optionally
the second tab (123) comprises a third flat part and a fourth flat part, the third flat part extends out of the second end face (1201), and the third flat part and the fourth flat part are bent toward each other.

7. The cylindrical electrode assembly (12) according to claim 6, wherein
a bent part of the second tab (123) is located at a root part of the second tab (123).

8. The cylindrical electrode assembly (12) according to claim 6 or claim 7, wherein
the second tab (123) is bent toward the second end face (1201) through one turn; optionally
the cylindrical electrode assembly (12) comprises a plurality of second tabs (123); and optionally
the plurality of second tabs (123) do not overlap with each other before being bent.

9. The cylindrical electrode assembly (12) according to any one of claims 6 to 8, wherein
the second tab (123) is bent toward a coiled center line of the cylindrical electrode assembly (12).

10. The cylindrical electrode assembly (12) according to any one of claims 6 to 9, wherein
the cylindrical electrode assembly (12) comprises a second electrode plate (124), the second electrode plate (124) comprises a second current collector (1240) and a second active material layer (1241), the second active material layer (1241) is coated on a surface of the second current collector (1240), and the second tab (123) is die-cut from an area that is of the second current collector (1240) and that is not coated with the second active material layer (1241); optionally
the second current collector (1240) is a composite current collector.

11. A cylindrical battery cell (10), comprising:
a housing assembly (11) comprising a first electrode lead-out part (110) configured to input or output electric energy; and
the cylindrical electrode assembly (12) according to any one of claims 1 to 10, wherein the first tab (121) is electrically connected to the first electrode lead-out part (110).

12. A battery (100), comprising the cylindrical battery cell (10) according to claim 11.

13. An electrical device, comprising the battery (100) according to claim 12, wherein the battery (100) is configured to provide electrical energy.

14. A manufacturing method for a cylindrical battery cell (10), comprising:
providing a housing assembly (11), wherein the housing assembly (11) comprises a first electrode lead-out part (110) configured to input or output electric energy;
providing a cylindrical electrode assembly (12), wherein the cylindrical electrode assembly (12) is of a coiled structure and comprises a main body (120) and a first tab (121), the main body (120) is provided with a first end face (1200), and the first tab (121) extends from the first end face (1200);
bending the first tab (121) toward the first end face (1200); and
electrically connecting the bent first tab (121) to the first electrode lead-out part (110), wherein
the cylindrical electrode assembly (12) comprises a first electrode plate (122), the first electrode plate (122) comprises a first current collector (1220) and a first active material layer (1221), the first active material layer (1221) is coated on a surface of the first current collector (1220), and the first tab (121) is die-cut from an area that is of the first current collector (1220) and that is not coated with the first active material layer (1221); and
an insulation material (126) is disposed between the first tab (121) and the active material layer-coated area of the first electrode plate (122).

15. The manufacturing method for the cylindrical battery cell (10) according to claim 14, wherein
the electrically connecting the bent first tab (121) to the first electrode lead-out part (110) comprises:
providing a protection piece between the bent first tab (121) and the first end face (1200), and performing laser welding on the first tab (121) and the first electrode lead-out part (110).

## Patentansprüche

1. Zylindrische Elektrodenanordnung (12), wobei die zylindrische Elektrodenanordnung (12) eine gewickelte Struktur aufweist und einen Hauptkörper (120) und eine erste Ableiterfahne (121) umfasst, wobei der Hauptkörper (120) mit einer ersten Stirnfläche (1200) versehen ist und die erste Ableiterfahne (121) aus der ersten Stirnfläche (1200) herausragt und zu der ersten Stirnfläche (1200) hin gebogen ist.

2. Zylindrische Elektrodenanordnung (12) nach Anspruch 1, wobei die erste Ableiterfahne (121) einen ersten flachen Teil (1210) und einen zweiten flachen Teil (1211) umfasst, wobei der erste flache Teil (1210) aus der ersten Stirnfläche (1200) herausragt und der erste flache Teil (1210) und der zweite flache Teil (1211) zueinander hin gebogen sind; und/oder
ein gebogener Teil der ersten Ableiterfahne (121) an einem Wurzelteil der ersten Ableiterfahne (121) angeordnet ist.

3. Zylindrische Elektrodenanordnung (12) nach Anspruch 1 oder Anspruch 2, wobei die erste Ableiterfahne (121) um eine Windung zu der ersten Stirnfläche (1200) hin gebogen ist; optional
die zylindrische Elektrodenanordnung (12) eine Vielzahl von ersten Ableiterfahnen (121) umfasst; und optional
sich die Vielzahl der ersten Ableiterfahnen (121) vor dem Biegen nicht miteinander überlappen.

4. Zylindrische Elektrodenanordnung (12) nach einem der Ansprüche 1 bis 3, wobei die erste Ableiterfahne (121) zu einer Wickelmittellinie der zylindrischen Elektrodenanordnung (12) hin gebogen ist.

5. Zylindrische Elektrodenanordnung (12) nach einem der Ansprüche 1 bis 4, wobei der erste Stromkollektor (1220) ein Verbundstromkollektor ist.

6. Zylindrische Elektrodenanordnung (12) nach einem der Ansprüche 1 bis 5, wobei der Hauptkörper (120) mit einer zweiten Stirnfläche (1201) versehen ist, wobei die zweite Stirnfläche (1201) in einer Richtung der Wickelmittellinie der zylindrischen Elektrodenanordnung (12) der ersten Stirnfläche (1200) gegenüberliegend angeordnet ist, wobei die zylindrische Elektrodenanordnung (12) ferner eine zweite Ableiterfahne (123) umfasst und die zweite Ableiterfahne (123) aus der zweiten Stirnfläche (1201) herausragt und zu der zweiten Stirnfläche (1201) hin gebogen ist; optional
die zweite Ableiterfahne (123) einen dritten flachen Teil und einen vierten flachen Teil umfasst, wobei der dritte flache Teil aus der zweiten Stirnfläche (1201) herausragt und der dritte flache Teil und der vierte flache Teil zueinander hin gebogen sind.

7. Zylindrische Elektrodenanordnung (12) nach Anspruch 6, wobei ein gebogener Teil der zweiten Ableiterfahne (123) an einem Wurzelteil der zweiten Ableiterfahne (123) angeordnet ist.

8. Zylindrische Elektrodenanordnung (12) nach Anspruch 6 oder Anspruch 7, wobei die zweite Ableiterfahne (123) um eine Windung zu der zweiten Stirnfläche (1201) hin gebogen ist; optional die zylindrische Elektrodenanordnung (12) eine Vielzahl von zweiten Ableiterfahnen (123) umfasst; und optional
sich die Vielzahl der zweiten Ableiterfahnen (123) vor dem Biegen nicht miteinander überlappen.

9. Zylindrische Elektrodenanordnung (12) nach einem der Ansprüche 6 bis 8, wobei die zweite Ableiterfahne (123) zu einer Wickelmittellinie der zylindrischen Elektrodenanordnung (12) hin gebogen ist.

10. Zylindrische Elektrodenanordnung (12) nach einem der Ansprüche 6 bis 9, wobei die zylindrische Elektrodenanordnung (12) eine zweite Elektrodenplatte (124) umfasst, wobei die zweite Elektrodenplatte (124) einen zweiten Stromkollektor (1240) und eine zweite Aktivmaterialschicht (1241) umfasst, wobei die zweite Aktivmaterialschicht (1241) auf eine Oberfläche des zweiten Stromkollektors (1240) aufgetragen ist und die zweite Ableiterfahne (123) aus einem Bereich des zweiten Stromkollektors (1240), der nicht mit der zweiten Aktivmaterialschicht (1241) beschichtet ist, ausgestanzt ist; optional
der zweite Stromkollektor (1240) ein Verbundstromkollektor ist.

11. Zylindrische Batteriezelle (10), umfassend:
eine Gehäuseanordnung (11), die einen ersten Elektrodenableitungsteil (110) umfasst, der dazu ausgebildet ist, elektrische Energie einzuspeisen oder auszugeben; und
die zylindrische Elektrodenanordnung (12) nach einem der Ansprüche 1 bis 10, wobei die erste Ableiterfahne (121) mit dem ersten Elektrodenableitungsteil (110) elektrisch verbunden ist.

12. Batterie (100), umfassend die zylindrische Batteriezelle (10) nach Anspruch 11.

13. Elektrische Vorrichtung, umfassend die Batterie (100) nach Anspruch 12, wobei die Batterie (100) dazu ausgebildet ist, elektrische Energie bereitzustellen.

14. Herstellungsverfahren für eine zylindrische Batteriezelle (10), umfassend:
Bereitstellen einer Gehäuseanordnung (11), wobei die Gehäuseanordnung (11) einen ersten Elektrodenableitungsteil (110) umfasst, der dazu ausgebildet ist, elektrische Energie einzuspeisen oder auszugeben;
Bereitstellen einer zylindrischen Elektrodenanordnung (12), wobei die zylindrische Elektrodenanordnung (12) eine gewickelte Struktur aufweist und einen Hauptkörper (120) und eine erste Ableiterfahne (121) umfasst, wobei der Hauptkörper (120) mit einer ersten Stirnfläche (1200) versehen ist und die erste Ableiterfahne (121) aus der ersten Stirnfläche (1200) herausragt;
Biegen der ersten Ableiterfahne (121) zu der ersten Stirnfläche (1200) hin; und
elektrisches Verbinden der gebogenen ersten Ableiterfahne (121) mit dem ersten Elektrodenableitungsteil (110).

15. Herstellungsverfahren für die zylindrische Batteriezelle (10) nach Anspruch 14, wobei das elektrische Verbinden der gebogenen ersten Ableiterfahne (121) mit dem ersten Elektrodenableitungsteil (110) umfasst:
Bereitstellen eines Schutzstücks zwischen der gebogenen ersten Ableiterfahne (121) und der ersten Stirnfläche (1200) und Durchführen eines Laserschweißens an der ersten Ableiterfahne (121) und dem ersten Elektrodenableitungsteil (110).

## Revendications

1. Ensemble d'électrodes cylindrique (12), l'ensemble d'électrodes cylindrique (12) étant d'une structure enroulée et comprenant un corps principal (120) et une première languette (121), le corps principal (120) étant pourvu d'une première face d'extrémité (1200), et la première languette (121) s'étendant hors de la première face d'extrémité (1200) et étant pliée vers la première face d'extrémité (1200).

2. Ensemble d'électrodes cylindrique (12) selon la revendication 1, dans lequel la première languette (121) comprend une première partie plate (1210) et une deuxième partie plate (1211), la première partie plate (1210) s'étend hors de la première face d'extrémité (1200), et la première partie plate (1210) et la deuxième partie plate (1211) sont pliées l'une vers l'autre ; et/ou
une partie pliée de la première languette (121) est située au niveau d'une partie de racine de la première languette (121).

3. Ensemble d'électrodes cylindrique (12) selon la revendication 1 ou la revendication 2, dans lequel la première languette (121) est pliée vers la première face d'extrémité (1200) d'un tour ; optionnellement l'ensemble d'électrodes cylindrique (12) comprend une pluralité de premières languettes (121) ; et optionnellement
la pluralité de premières languettes (121) ne se chevauchent pas les unes les autres avant d'être pliées.

4. Ensemble d'électrodes cylindrique (12) selon l'une quelconque des revendications 1 à 3, dans lequel la première languette (121) est pliée vers une ligne médiane d'enroulement de l'ensemble d'électrodes cylindrique (12).

5. Ensemble d'électrodes cylindrique (12) selon l'une quelconque des revendications 1 à 4, dans lequel le premier collecteur de courant (1220) est un collecteur de courant composite.

6. Ensemble d'électrodes cylindrique (12) selon l'une quelconque des revendications 1 à 5, dans lequel le corps principal (120) est pourvu d'une deuxième face d'extrémité (1201), la deuxième face d'extrémité (1201) est disposée à l'opposé de la première face d'extrémité (1200) dans une direction de la ligne médiane d'enroulement de l'ensemble d'électrodes cylindrique (12), l'ensemble d'électrodes cylindrique (12) comprend en outre une deuxième languette (123), et la deuxième languette (123) s'étend depuis la deuxième face d'extrémité (1201) et est pliée vers la deuxième face d'extrémité (1201) ; optionnellement
la deuxième languette (123) comprend une troisième partie plate et une quatrième partie plate, la troisième partie plate s'étend hors de la deuxième face d'extrémité (1201), et la troisième partie plate et la quatrième partie plate sont pliées l'une vers l'autre.

7. Ensemble d'électrodes cylindrique (12) selon la revendication 6, dans lequel une partie pliée de la deuxième languette (123) est située au niveau d'une partie de racine de la deuxième languette (123).

8. Ensemble d'électrodes cylindrique (12) selon la revendication 6 ou la revendication 7, dans lequel la deuxième languette (123) est pliée vers la deuxième face d'extrémité (1201) d'un tour ; optionnellement l'ensemble d'électrodes cylindrique (12) comprend une pluralité de deuxièmes languettes (123) ; et optionnellement
la pluralité de deuxièmes languettes (123) ne se chevauchent pas les unes les autres avant d'être pliées.

9. Ensemble d'électrodes cylindrique (12) selon l'une quelconque des revendications 6 à 8, dans lequel la deuxième languette (123) est pliée vers une ligne médiane d'enroulement de l'ensemble d'électrodes cylindrique (12).

10. Ensemble d'électrodes cylindrique (12) selon l'une quelconque des revendications 6 à 9, dans lequel l'ensemble d'électrodes cylindrique (12) comprend une deuxième plaque d'électrode (124), la deuxième plaque d'électrode (124) comprend un deuxième collecteur de courant (1240) et une deuxième couche de matériau actif (1241), la deuxième couche de matériau actif (1241) est revêtue sur une surface du deuxième collecteur de courant (1240), et la deuxième languette (123) est découpée à l'emporte-pièce dans une zone du deuxième collecteur de courant (1240) qui n'est pas revêtue de la deuxième couche de matériau actif (1241) ; optionnellement
le deuxième collecteur de courant (1240) est un collecteur de courant composite.

11. Élément de batterie cylindrique (10), comprenant :
un ensemble de boîtier (11) comprenant une première partie de sortie d'électrode (110) configurée pour recevoir ou fournir de l'énergie électrique ; et
l'ensemble d'électrodes cylindrique (12) selon l'une quelconque des revendications 1 à 10, dans lequel la première languette (121) est électriquement connectée à la première partie de sortie d'électrode (110).

12. Batterie (100), comprenant l'élément de batterie cylindrique (10) selon la revendication 11.

13. Dispositif électrique, comprenant la batterie (100) selon la revendication 12, dans lequel la batterie (100) est configurée pour fournir de l'énergie électrique.

14. Procédé de fabrication d'un élément de batterie cylindrique (10), comprenant :
la fourniture d'un ensemble de boîtier (11), l'ensemble de boîtier (11) comprenant une première partie de sortie d'électrode (110) configurée pour recevoir ou fournir de l'énergie électrique ;
la fourniture d'un ensemble d'électrodes cylindrique (12), l'ensemble d'électrodes cylindrique (12) étant d'une structure enroulée et comprenant un corps principal (120) et une première languette (121), le corps principal (120) étant pourvu d'une première face d'extrémité (1200), et la première languette (121) s'étendant depuis la première face d'extrémité (1200) ;
le pliage de la première languette (121) vers la première face d'extrémité (1200) ; et
la connexion électrique de la première languette (121) pliée à la première partie de sortie d'électrode (110).

15. Procédé de fabrication de l'élément de batterie cylindrique (10) selon la revendication 14, dans lequel la connexion électrique de la première languette (121) pliée à la première partie de sortie d'électrode (110) comprend :
la fourniture d'une pièce de protection entre la première languette (121) pliée et la première face d'extrémité (1200), et la réalisation d'un soudage au laser sur la première languette (121) et la première partie de sortie d'électrode (110).
